# EUROPEAN PATENT SPECIFICATION

(11) **EP 3 297 324 B1**
(45) Date of publication and mention of the grant of the patent: **04.03.2020**
(21) Application number: 16792216.0
(22) Date of filing: 13.05.2016
(51) Int. Cl.: H04W 8/00, H04W 88/04, H04W 76/23

(54) **INFORMATION PROCESSING METHOD AND COMMUNICATION NODE**
INFORMATIONSVERARBEITUNGSVERFAHREN UND KOMMUNIKATIONSKNOTEN
PROCÉDÉ DE TRAITEMENT D'INFORMATIONS ET NOEUD DE COMMUNICATION

(30) Priority: 14.05.2015 CN 201510246172
(43) Date of publication of application: 21.03.2018
(73) Proprietor: ZTE Corporation, Shenzhen, Guangdong 518057 (CN)
(72) Inventor: HUANG, Ying, Shenzhen Guangdong 518057 (CN); CHEN, Lin, Shenzhen Guangdong 518057 (CN)
(74) Representative: Deambrogi, Edgardo
(86) International application number: PCT/CN2016/082077
(87) International publication number: WO 2016/180366

(56) References cited:
- WO-A1-2014/071621
- WO-A1-2015/004142
- WO-A1-2015/004142
- CN-A- 102 780 993
- CN-A- 103 179 575
- CN-A- 104 244 294
- CN-A- 104 349 402
- ERICSSON: "ProSe UE to network Relay & Service continuity solution", 3GPP DRAFT; S2-150787_EPROSE-EXT_RELAY_SC_APRIL2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Jose Del Cabo, Mexico; 20150413 - 20150417 6 April 2015 (2015-04-06), XP050962107, Retrieved from the Internet: URL:http://www.3gpp.org/ftp/tsg_sa/WG2_Arc h/TSGS2_108_Los_Cabos/Docs/ [retrieved on 2015-04-06]
- NEC.: 'E-UTRAN based Discovery of ProSe Relays' 3GPP SA WG2MEETING S2#98 S2-132559 19 July 2013, pages 2 - 4, XP050725945

## Description

### Technical Field

The present invention relates to, but not limited to, the field of communications.

### Background

With the development of wireless multimedia services, demands of people for high data rate and user experience are increasing, so as to make higher requirements for system capacity and coverage of a traditional cellular network. In addition, the popularization of applications such as social networking, near field data sharing and local advertising enable demands of people, for knowing people or things of interest nearby and communicating therewith, to gradually increase. A cell-based cellular network has obvious limitations to high data rate and supporting of proximity services, and under this demand background, a Device-to-Device (D2D) technology representative of a new development direction of future communication technologies emerges. Application of the D2D technology can alleviate burdens on the cellular network, reduce the power consumption of a battery of a User Equipment (UE), increase the data rate, improve the robustness of network infrastructure, and well meet requirements for the foregoing high data rate services and proximity services.

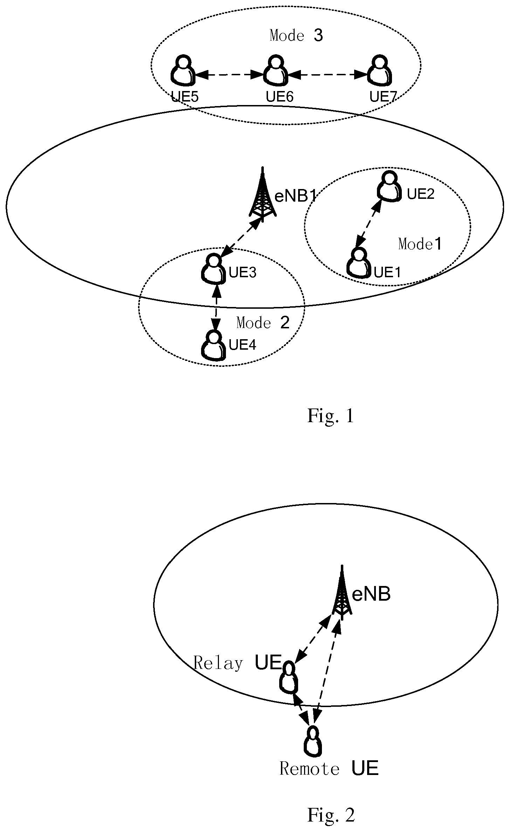

The D2D technology can work at a licensed band or an unlicensed band to allow a plurality of UEs (i.e., D2D UE) supporting a D2D function to perform direct discovery/direct communication in the presence of network infrastructure or in the absence of network infrastructure. There are mainly three D2D application scenarios as follows.
1) UE1 and UE2 perform data interaction under the coverage of a cellular network, and user plane data does not pass through network infrastructure, as shown in Mode 1 in Fig. 1.
2) A UE in a weakly covering/coverless area performs relayed transmission, as shown in Mode 2 in Fig. 1. UE4 with poor signal quality is allowed to communicate with a network via a proximal UE3 covered by the network, and coverage expansion and capacity improvement of an operator can be assisted.
3) When an earthquake or an emergency occurs and a cellular network cannot normally work, inter-device direct communication is allowed, as shown in Mode 3 in Fig. 1. Control planes and user planes among UE5, UE6 and UE7 perform one-hop or multi-hop data communication without network infrastructure.

The D2D technology usually includes a D2D discovery technology and a D2D communication technology.
1) The D2D discovery technology refers to a technology for judging/determining whether two or more D2D UEs are proximal to each other (e.g., within a range capable of performing D2D direct communication) or judging/determining whether a first UE is proximal to a second UE.
2) The D2D communication technology refers to a technology for direct communication of some or all communication data between D2D UEs without network infrastructure.

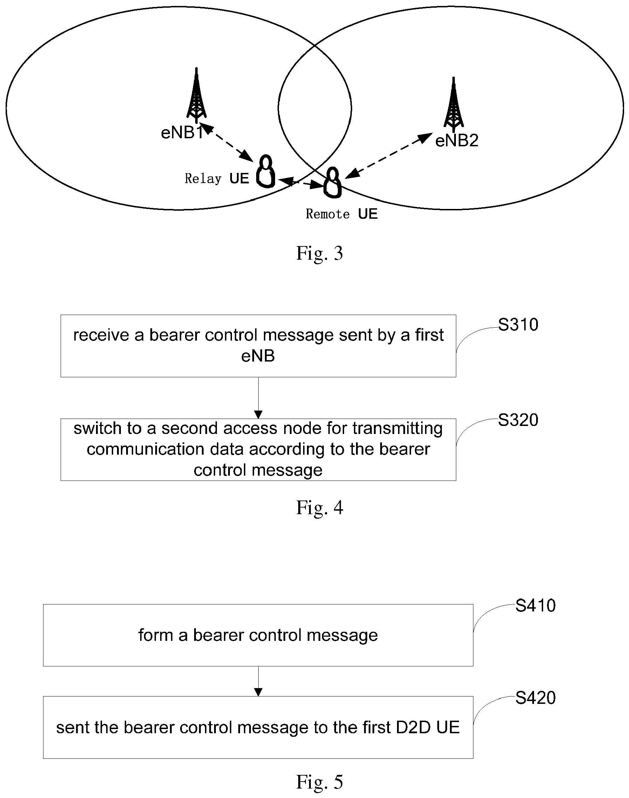

In application scenarios as shown in Fig. 2 and Fig. 3, a D2D UE may serve as a relay node, such that a remote D2D UE at the coverage edge of a cellular network or out of coverage can perform cellular communication with a network through a relay node UE, and the D2D UE performs D2D communication through the relay node UE. The D2D UE probably moves at the coverage edge of a cell, and in this case, the D2D UE needs to switch an access node thereof to access the network. For example, after moving to cell coverage, the D2D UE relayed by a relay UE can access the network through an evolved Node B (eNB), and after moving out of the cell coverage, the UE which accesses the network through the eNB within the cell coverage can access the network through the relay UE. However, a method for switching an access node of a D2D UE is not provided in the related art, thus influencing the continuity of communication services of a UE at the coverage edge of a cell.

ERICSSON "ProSe UE to network Relay & Service continuity solution ", 3GPP DRAFT, S2-150787; and patent documents WO 2015/004142, CN104244294 and WO 2014/071621 provide respective technical solutions; however, the above mentioned problem still remains unsolved.

### Summary

The following is a brief introduction for a subject described herein in detail. The brief introduction is not intended to restrict the scope of protection of claims.

In embodiments of the prevent invention, a method for processing information and a communication node are provided, to at least solve the problem in the related art of switch of an access node of a D2D UE.

According to a first aspect of the embodiment of the present invention, a method for processing information is provided, and the method includes: receiving bearer control information sent by a first eNB, switching to a second access node according to the bearer control information for transmitting communication data, the first eNB is a first access node or the second access node, and the second access node is the first eNB or a D2D relay node, wherein the bearer control information includes a bearer switch indicator or bearer switch judgment parameter information; the bearer switch indicator is used to instruct a first D2D UE to switch to the second access node for transmitting communication data; and the bearer switch judgment parameter information is used for the first D2D UE to determine whether the first D2D UE can switch to the second access node for transmitting communication data, wherein the bearer control information comprises a D2D relay node discovery trigger threshold value, and the D2D relay node discovery trigger threshold value is used to trigger the first D2D UE to start D2D relay node discovery and to search for a D2D relay node allowing access for the first D2D UE.

In an embodiment, the bearer switch judgment parameter information includes at least one of a Radio Resource Management (RRM) measurement threshold value of a serving cell and/or a neighbor cell performed by the first D2D UE, and measurement threshold values for signals sent by a first relay node and a second relay node, the second relay node is a relay node distant from the first relay node within a specified range; and the first relay node is a D2D relay node connected to the first D2D UE, and the second relay node is a D2D relay node not connected to the first D2D UE.

In an embodiment, the method further includes: measuring at least one of a serving cell, a neighbor cell, a first relay node and a second relay node, so as to form a measurement result, and the second relay node is a relay node distant from the first relay node within a specified range; and the first relay node is a D2D relay node connected to the first D2D UE, and the second relay node is a D2D relay node not connected to the first D2D UE; and comparing the measurement result with the bearer switch judgment parameter information to determine whether the first D2D UE can switch to the second access node for transmitting communication data.

In an embodiment, the D2D relay node discovery trigger threshold value comprises a first threshold value. The first threshold value is used to trigger, when a measurement value of a cell to which the first D2D UE is accessed is smaller than the first threshold value, the first D2D UE to start D2D relay node discovery, so as to search for a D2D relay node allowing access for the first D2D UE.

In an embodiment, the D2D relay node discovery trigger threshold value comprises a first threshold value and a second threshold value. The first threshold value and the second threshold value are used to trigger, when a measurement value of a cell to which the first D2D UE is accessed is smaller than the first threshold value and a measurement value for a neighbor cell of the cell to which the first D2D UE is accessed is smaller than the second threshold value, the first D2D UE to start D2D relay node discovery, so as to search for a relay node allowing access for the first D2D UE.

In an embodiment, before switching to a second access node according to the bearer control information for transmitting communication data, the method further includes: sending bearer switch judgment auxiliary information to the first eNB, and the first eNB is the first access node or the second access node.

In an embodiment, the bearer switch judgment auxiliary information includes at least one of the following: UE to Network (UE-to-NW) relay indication information, a measurement report, and location information. The UE-to-NW relay indication information is used to instruct the first D2D UE to perform a current data transmission through a UE-to-NW relay. The measurement report comprises an RRM measurement result of a current serving cell and/or neighbor cell performed by the first D2D UE, and/or a measurement result of a first relay node and a second relay node performed by the first D2D UE. The second relay node is a relay node distant from the first relay node within a specified range, and the first relay node is a D2D relay node connected to the first D2D UE, and the second relay node is a D2D relay node not connected to the first D2D UE. The location information includes current geographical location information of the first D2D UE.

In an embodiment, the method further includes: before the first D2D UE sends a measurement report to the first eNB, receiving measurement reporting configuration information sent by the first eNB; performing measurement according to the measurement reporting configuration information, so as to form a measurement result; and when the measurement result satisfies a reporting condition, sending the measurement report to the first eNB.

According to a second aspect of the embodiment of the present invention, a method for processing information is provided. The method includes: forming bearer control information; and sending the bearer control information to a first D2D UE, the bearer control information is used to switch the first D2D UE to a second access node for transmitting communication data; the second access node is a first eNB or a D2D relay node, and the first eNB is a first access node or the second access node.

In an embodiment, the bearer control information includes a bearer switch indicator or bearer switch judgment parameter information. The bearer switch indicator is used to instruct a first D2D UE to switch to the second access node for transmitting communication data. The bearer switch judgment parameter information is used for the first D2D UE to determine whether the first D2D UE can switch to the second access node for transmitting communication data.

In an embodiment, the bearer switch judgment parameter information includes at least one of an RRM measurement threshold value of a serving cell and a neighbor cell performed by the first D2D UE, and measurement threshold values for signals sent by a first relay node and a second relay node.

In an embodiment, the bearer control information comprises a D2D relay node discovery trigger threshold value. The D2D relay node discovery trigger threshold value is used to trigger the first D2D UE to start D2D relay node discovery, so as to search for a D2D relay node allowing access for the first D2D UE.

In an embodiment, the D2D relay node discovery trigger threshold value comprises a first threshold value. The first threshold value is used to trigger, when a measurement value of a cell to which the first D2D UE is accessed is smaller than the first threshold value, the first D2D UE to start D2D relay node discovery, so as to search for a D2D relay node allowing access for the first D2D UE.

In an embodiment, the D2D relay node discovery trigger threshold value comprises a first threshold value and a second threshold value. The first threshold value and the second threshold value are used to trigger, when a measurement value of a cell to which the first D2D UE is accessed is smaller than the first threshold value and a measurement value for a neighbor cell of the cell to which the first D2D UE is accessed is smaller than the second threshold value, the first D2D UE to start D2D relay node discovery, so as to search for a relay node allowing access for the first D2D UE.

In an embodiment, the method further includes a step of receiving bearer switch judgment auxiliary information sent by the first D2D UE, and the step of forming bearer control information includes: forming the bearer control information according to the bearer switch judgment auxiliary information.

In an embodiment, the bearer switch judgment auxiliary information includes at least one of the following: UE-to-NW relay indication information, a measurement report, and location information. The UE-to-NW relay indication information is used to instruct the first D2D UE to perform a current data transmission through a UE-to-NW relay. The measurement report comprises an RRM measurement result of a current serving cell and/or neighbor cell performed by the first D2D UE and/or a measurement result of the UE about signals sent by a first access node, and/or a first relay node and/or a second relay node. The second relay node is a relay node distant from the first relay node within a specified range, the first relay node is a D2D relay node connected to the first D2D UE, and the second relay node is a D2D relay node not connected to the first D2D UE. The location information includes current geographical location information of the first D2D UE.

According to a third aspect of the embodiment of the present invention, a communication node is provided. The communication node is a first D2D UE.

The first D2D UE includes: a first receiving unit, configured to receive bearer control information sent by a first eNB; a switch unit, configured to switch to a second access node according to the bearer control information for transmitting communication data, the first eNB is a first access node or the second access node, and the second access node is the first eNB or a D2D relay node.

In an embodiment, the bearer control information includes a bearer switch indicator or bearer switch judgment parameter information. the bearer switch indicator is used to instruct the first D2D UE to switch to the second access node for transmitting communication data, and the bearer switch judgment parameter information is used for the first D2D UE to determine whether the first D2D UE can switch to the second access node for transmitting communication data.

In an embodiment, the communication node further includes: a first measurement unit, configured to measure at least one of a serving cell, a neighbor cell, a first relay node connected to the first D2D UE, and a second relay node, so as to form a measurement result, and the second relay node is a relay node distant from the first relay node within a specified range; and a determination unit, configured to compare the measurement result with the bearer switch judgment parameter information to determine whether the first D2D UE can switch to the second access node for transmitting communication data.

In an embodiment, the first D2D UE further includes a first sending unit, configured to send bearer switch judgment auxiliary information to the first eNB.

According to a fourth aspect of the embodiment of the present invention, a communication node is provided. The communication node includes: a forming unit, configured to form bearer control information; and a second sending unit, configured to send the bearer control information to a first D2D UE, the bearer control information is used to switch the first D2D UE to a second access node for transmitting communication data; the second access node is a first eNB or a D2D relay node; and the first eNB is a first access node or the second access node.

In an embodiment, the bearer control information includes a bearer switch indicator or bearer switch judgment parameter information. The bearer switch indicator is used to instruct a first D2D UE to switch to the second access node for transmitting communication data, and the bearer switch judgment parameter information is used for the first D2D UE to determine whether the first D2D UE can switch to the second access node for transmitting communication data.

In an embodiment, the communication node further includes a second receiving unit, configured to receive bearer switch judgment auxiliary information sent by the first D2D UE. The forming unit is configured to form the bearer control information according to the bearer switch judgment auxiliary information.

According to a fifth aspect of the embodiment of the present invention, a computer-readable storage medium is provided. The computer-readable storage medium stores a computer-executable instruction, and the computer-executable instruction is used to execute at least one of the foregoing methods.

According to the information processing method and the communication node in the embodiment of the present invention, when a node of a first D2D UE is switched or the first D2D UE is connected with a plurality of access nodes at the same time, demands for bearer switch exist with the movement of the first D2D UE. In the method of the present embodiment, bearer control information is sent through a first eNB, and bearer switch for the D2D UE can be achieved in time, so as to maintain the continuity of data transmission.

After the drawings and the detailed descriptions are read and understood, other aspects may be understood.

### Brief Description of the Drawings

Fig. 1 is a first scenario diagram of D2D communications.
Fig. 2 is a second scenario diagram of D2D communications.
Fig. 3 is a third scenario diagram of D2D communications.
Fig. 4 is a first flowchart of a method for processing information according to an embodiment of the present invention.
Fig. 5 is a second flowchart of a method for processing information according to an embodiment of the present invention.
Fig. 6 is a first schematic diagram of a method for processing information according to an example of the present invention.
Fig. 7 is a second schematic diagram of a method for processing information according to an example of the present invention.
Fig. 8 is a structure diagram of a first D2D UE according to an embodiment of the present invention.
Fig. 9 is a structure diagram of an access node according to an embodiment of the present invention.

### Detailed Description of the Embodiments

The implementation manner of the present invention will be elaborated hereinbelow with the drawings of the specification and embodiments.

### Embodiment one:

As shown in Fig. 4, the present embodiment provides a method for processing information. The method includes the steps as follows.

In step S310, bearer control information sent by a first eNB is received.

In step S320, the first eNB is switched to a second access node according to the bearer control information for transmitting communication data, the first eNB is a first access node or the second access node, and the second access node is the first eNB or a D2D relay node.

After a first D2D UE is accessed to two access nodes or an access node is switched, the first D2D UE has demands for bearer switch during communication. So, the present embodiment provides A method for processing information of switching to a second access node for data transmission, which has the advantage of simple and convenient implementation.

When the first eNB is a first access node, the second access node may be a D2D relay node, and the D2D relay node may be a second D2D UE. When the first eNB is a second access node, the first access node may be a D2D relay node. The second D2D UE is a UE different from the first D2D UE.

The bearer control information includes a bearer switch indicator or bearer switch judgment parameter information.

The bearer switch indicator is directly used to instruct the first D2D UE to switch to the second access node for transmitting communication data.

The bearer switch judgment parameter information is used for the first D2D UE to determine whether the first D2D UE can switch to the second access node for transmitting communication data.

The bearer switch judgment parameter information includes at least one of an RRM measurement threshold value of a serving cell and a neighbor cell performed by the first D2D UE, and measurement threshold values of signals sent by a first relay node and a second relay node. The second relay node is a relay node distant from the first relay node within a specified range; and the first relay node is a D2D relay node connected to the first D2D UE, and the second relay node is a D2D relay node not connected to the first D2D UE.

The bearer switch indicator is used to instruct a first D2D UE to switch to a first eNB or a relay node for transmitting communication data. At this time, the first eNB may determine whether to allow the first D2D UE to access the first eNB according to an own load or a current load of the relay node and a communication quality manner of a channel between the first eNB and the first D2D UE after receiving a bearer switch request sent by the first D2D UE, and if so, the first eNB will send the bearer switch indicator to the first D2D UE, so that the first D2D UE will receive the bearer switch indicator. Otherwise, the first D2D UE may directly receive a message indicative of a bearer switch request failure from the first eNB. So, in this manner, the first eNB determines allowance of the first D2D UE to be switched to the first eNB for network access.

The bearer control information includes bearer switch judgment parameter information. The bearer switch judgment parameter information includes at least one of an RRM measurement threshold value and a measurement threshold value for D2D communication. Thus, the first D2D UE may determine whether the first D2D UE can switch to the second access node for transmitting communication data after performing judgment according to the measurement threshold value by measuring a reference signal and other signals sent by the first eNB. In the present manner, whether the first D2D UE can switch to the second access node for transmitting communication data is determined according to a measurement result and bearer switch judgment parameter information.

If the first eNB sends the bearer switch indicator, the first eNB will self-judge whether to allow the first D2D UE to be switched to the second access node for bearer switch.

After receiving the bearer switch judgment parameter information, the first D2D UE will self-determine whether to be able to switch a bearer to a second access node. For example, the first D2D UE will measure at least one of a serving cell and/or a neighbor cell and/or a first relay node and a second relay node, so as to form a measurement result, and the second relay node is a relay node distant from the first relay node within a specified range; and the first relay node is a D2D relay node connected to the first D2D UE, and the second relay node is a D2D relay node not connected to the first D2D UE. The first D2D UE compares the measurement result with the bearer judgment information to determine whether the first D2D UE can switch to the second access node for transmitting communication data.

How to compare may refer to the following example:
it is determined that an eNB transmits cellular communication data when a measurement result of the first D2D UE about a serving cell and/or a neighbor cell and/or a D2D relay node satisfies the following conditions:
bearer switch judgment parameter information received by UE comprises a Reference Signal Received Power (RSRP) threshold value of a serving cell, and an RSRP measurement value of the serving cell is higher than the threshold value;
and/or, bearer switch judgment parameter information received by the first D2D UE comprises an RSRP threshold value of a neighbor cell, and an RSRP measurement value of the neighbor cell is higher than the threshold value;
and/or, bearer switch judgment parameter information received by the first D2D UE comprises a signal intensity threshold value of a D2D relay node, and a signal quality measurement value of the D2D relay node is lower than the threshold value.

Before step S320 is executed, the method may further include the following step: Bearer switch judgment auxiliary information is sent to the first eNB.

The bearer switch judgment auxiliary information in the present embodiment may be used to provide basis for forming the bearer control information by the first eNB. For example, basis is provided for the first eNB to determine whether to send a bearer switch indicator or a bearer switch request failure to the first D2D UE, or for example, basis is provided for the first eNB to determine an RRM measurement threshold value and a measurement threshold value for D2D communication, in order that the first eNB controls access for the first D2D UE.

The bearer switch judgment auxiliary information includes at least one of the following: UE-to-NW relay indication information, a measurement report, and location information. The UE-to-NW relay indication information is used to instruct the first D2D UE to perform a current data transmission through a UE-to-NW relay; the measurement report comprises an RRM measurement result of a current serving cell and/or neighbor cell performed by the first D2D UE; and the location information includes current geographical location information of the first D2D UE. These pieces of information can assist the first eNB in determination of contents of a response message. For example, the current location of the first D2D UE is at the edge of a cell subordinate to the first eNB. At this time, if the first D2D UE is directly switched to the first eNB for transmitting communication data, the problem of poor communication effect is probably caused. At this time, the first eNB may form a response message of not allowing the first D2D UE to be switched to the first eNB to access a network according to the location information, or the foregoing RRM measurement threshold value is improved.

If the first D2D UE needs to send a measurement report to the first eNB, the method further includes: before the first D2D UE sends a measurement report to the first eNB, receiving measurement reporting configuration information sent by the first eNB; performing measurement according to the measurement reporting configuration information, so as to form a measurement result; and when the measurement result satisfies a reporting condition, sending the measurement report to the first eNB.

The measurement result here satisfies the reporting condition. For example, channel measurement finds that a signal sent by the first eNB reaches a signal intensity threshold value of the first D2D UE, but the reporting condition is not limited to this.

In addition, the bearer control information comprises a D2D relay node discovery trigger threshold value.

The D2D relay node discovery trigger threshold value is used to trigger the first D2D UE to start D2D relay node discovery, so as to search for a D2D relay node allowing access for the first D2D UE.

The D2D relay node discovery trigger threshold value comprises a first threshold value.

The first threshold value is used to trigger, when a measurement value of a cell to which the first D2D UE is accessed is smaller than the first threshold value, the first D2D UE to start D2D relay node discovery, so as to search for a D2D relay node allowing access for the first D2D UE.

The first threshold value is at least one of an RSRP value and a Reference Signal Received Quality (RSRQ) value. The measurement value for the first cell here is a measurement value for a signal sent by the first cell, such as a reference signal sent by the first cell.

The first D2D UE will measure a cell to which the first D2D UE is accessed according to the D2D relay node discovery trigger threshold value, so as to form a measurement value. The cell is a general term of cells formed by eNBs. The measurement may include measurement for the signal sent by the serving cell to which the first D2D UE is accessed.

The D2D relay node discovery trigger threshold value may further comprise a second threshold value.

The first threshold value and the second threshold value are used to trigger, when a measurement value of a cell to which the first D2D UE is accessed is smaller than the first threshold value and a measurement value for a neighbor cell of the cell to which the first D2D UE is accessed is smaller than the second threshold value, the first D2D UE to start D2D relay node discovery, so as to search for a relay node allowing access for the first D2D UE.

The second threshold value may also be the RSRP value and/or RSRQ value. To be different, the second threshold value is used to judge a measurement value for a neighbor cell of a cell to which the first D2D UE is accessed. So, the first D2D UE will also measure the neighbor cell of the serving cell, and perform comparison to judge whether a D2D relay node allowing access for the first D2D UE is found. The measurement for a cell to which the first D2D UE is accessed may include measurement for a discovery signal or a reference signal sent by the cell corresponding to the first D2D UE.

Discovery of the D2D relay node may be implemented by means of a D2D discovery process in the related art, so, the first D2D UE can also discover the D2D relay node allowing access for the first D2D UE according to the bearer control information.

### Embodiment two:

As shown in Fig. 5, the present embodiment provides a method for processing information. The method includes the steps as follows.

In step S410, bearer control information is formed.

In step S420, the bearer control information is sent to a first D2D UE,and the bearer control information is used to switch the first D2D UE to a second access node for transmitting communication data.

Herein, the second access node is a first eNB or a D2D relay node, and the first eNB is a first access node or the second access node.

The present embodiment is the information processing method corresponding to Method Embodiment one. The information processing method in the present embodiment is mainly applied in an access node, and is usually applied in an eNB.

The first eNB may send the bearer control information in a broadcast or unicast manner. The bearer control information may be borne in cell information and sent in the broadcast or unicast manner. Or, the bearer control information may be borne in dedicated random access resource information and sent in the unicast manner. The bearer control information may include a bearer switch indicator. The bearer switch indicator is used to instruct the first D2D UE to switch to the second access node for transmitting communication data.

The bearer control information may include bearer switch judgment parameter information. The bearer switch judgment parameter information is used for the first D2D UE to determine whether the first D2D UE can switch to the second access node for transmitting communication data.

The bearer switch judgment parameter information includes at least one of an RRM measurement threshold value of a serving cell and a neighbor cell performed by the first D2D UE, and measurement threshold values of signals sent by a first relay node and a second relay node. The second relay node is a relay node distant from the first relay node within a specified range; and the first relay node is a D2D relay node connected to the first D2D UE, and the second relay node is a D2D relay node not connected to the first D2D UE.

The method in the present embodiment further includes: receiving bearer switch judgment auxiliary information sent by the first D2D UE. Step S410 may include: forming the bearer control information according to the bearer switch judgment auxiliary information.

So, the communication node may form the bearer control information according to the bearer switch judgment auxiliary information sent by the first D2D UE.

The bearer switch judgment auxiliary information includes at least one of the following:
UE-to-NW relay indication information, a measurement report, and location information;
the UE-to-NW relay indication information is used to instruct the first D2D UE to perform a current data transmission through a UE-to-NW relay;
the measurement report comprises an RRM measurement result of a current serving cell and/or neighbor cell performed by the first D2D UE and/or a measurement result of the UE about signals sent by a first access node and/or a first relay node and/or a second relay node; the second relay node is a relay node distant from the first relay node within a specified range; the first relay node is a D2D relay node connected to the first D2D UE, and the second relay node is a D2D relay node not connected to the first D2D UE; and
the location information includes current geographical location information of the first D2D UE.

These pieces of information can provide assistance for forming the bearer control information by the first eNB.

When the measurement result satisfies a reporting condition, the measurement report is reported.

The bearer control information comprises a D2D relay node discovery trigger threshold value. The D2D relay node discovery trigger threshold value is used to trigger the first D2D UE to start D2D relay node discovery, so as to search for a D2D relay node allowing access for the first D2D UE. The D2D relay node discovery trigger threshold value comprises a first threshold value. The first threshold value is used to trigger, when a measurement value of a cell to which the first D2D UE is accessed is smaller than the first threshold value, the first D2D UE to start D2D relay node discovery, so as to search for a D2D relay node allowing access for the first D2D UE. In addition, the D2D relay node discovery trigger threshold value may further comprise a second threshold value. The first threshold value and the second threshold value are used to trigger, when a measurement value of a cell to which the first D2D UE is accessed is smaller than the first threshold value and a measurement value for a neighbor cell of the cell to which the first D2D UE is accessed is smaller than the second threshold value, the first D2D UE to start D2D relay node discovery, so as to search for a relay node allowing access for the first D2D UE.

Both the first threshold value and the second threshold value may be RSRP values and/or RSRQ values for a signal sent by the corresponding cell. So, it is convenient for the first D2D UE to self-discover a D2D relay node allowing access thereof according to the bearer control information. Details of the parameter in the present embodiment may refer to description corresponding to Method Embodiment one, and will not be repeated herein.

The embodiment of the present invention also provides a computer-readable storage medium. The computer-readable storage medium stores a computer-executable instruction, and the computer-executable instruction is used to execute the foregoing information processing method.

Two invention examples are provided hereinbelow with reference to any one of the above embodiments.

### Example 1:

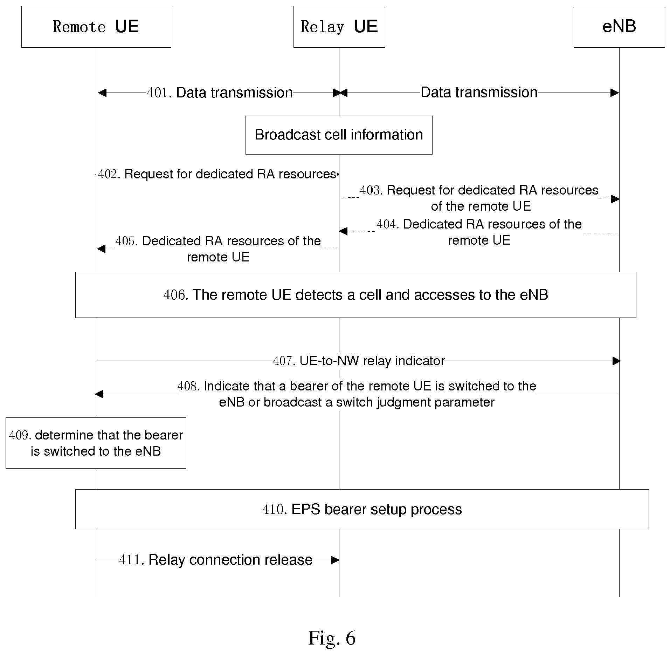

The present example describes a method flow of switching to an eNB for network access after a remote UE of a relay UE moves to a coverage range of the eNB. Fig. 6 is a flowchart of the method in the present example. The method in the present embodiment includes the steps as follows.

In step 401, under a current scenario, a remote UE performs data transmission with an eNB via a relay UE, and the relay UE may send auxiliary information in a broadcast manner so as to assist the remote UE in more quickly detecting a neighbor cell. For example, the auxiliary information is information of a cell where the relay UE is located or a neighbor cell or a proximal cell. The cell information may include one or combination of the following: a frequency point, a cell identifier, a cell access barring indicator, and a cell access probability parameter.

The cell access barring indicator is used to indicate that access to the cell is barred, for example, in case of heavy load of the cell. The cell access probability parameter may also be used to control the quantity of UEs accessed to the cell. For example, the value range of the cell access probability parameter is 0-1, the remote UE may select a random number within a range of 0 to 1, if the random number is smaller than the cell access probability parameter, the remote UE is allowed to be accessed to the cell, and if the random number is greater than or equal to the cell access probability parameter, the remote UE is barred to be accessed to the cell.

The relay UE may learn of a load situation of the serving cell and/or the neighbor cell according to an Access Class Barring (ACB) parameter value broadcast in a System Information Block (SIB) of the serving cell and/or the neighbor cell. In addition, in view of load balancing, the relay UE may only broadcast information of a light-load cell/neighbor cell to the remote UE. For example, if the load of a cell where the relay UE is located is heavy (the relay UE may perform judgment according to an AC parameter), access barring of the cell where the relay UE is located may be indicated or an access probability parameter is broadcast, or frequency point/Physical Cell Identifier (PCI) information of the cell where the relay UE is located is not broadcast, so as to avoid from UE detection and attempting to be accessed to the cell where the relay UE is located.

Besides, in addition to a manner of broadcasting via the relay UE, the auxiliary information may also be obtained after the remote UE actively requests. For example, when the remote UE detects that it is entering a coverage range of a cell, the relay UE is requested for auxiliary information.

In step 402, if the remote UE is desired to execute a non-contention RA process, the relay UE may be requested for dedicated RA resources. The dedicated RA resources include a dedicated random access preamble and dedicated time and frequency domain resources.

In step 403, in an embodiment, after receiving a dedicated RA resource request, the relay UE may request an eNB for dedicated RA resources for the remote UE.

In step 404, if the eNB receives the dedicated RA resource request, the dedicated RA resources for the remote UE may be sent to the relay UE.

In step 405, after receiving the dedicated RA resources allocated to the remote UE by the eNB, the relay UE sends the dedicated resources to the remote UE.

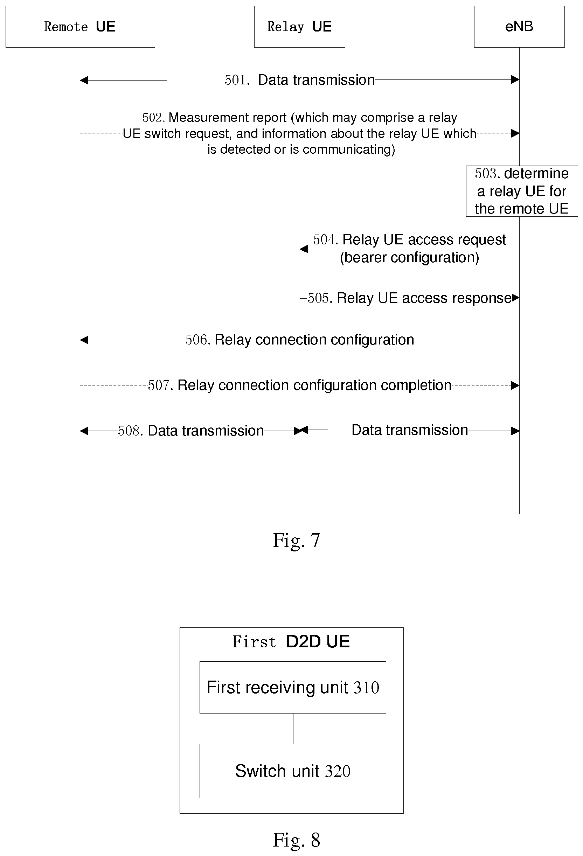

In step 406, the remote UE detects an available cell according to the auxiliary information received from the relay UE and/or the dedicated RA resources, and is accessed to the cell. For example, the remote UE in Fig. 8 detects the cell and is accessed to the eNB.

In step 407, in an embodiment, the remote UE may send a UE-to-NW relay indicator to the accessed eNB, the indicator being used to indicate that the remote UE is being accessed to the network via a UE-to-NW relay of the relay UE. In an embodiment, the remote UE may also inform the eNB of information of the accessed relay UE (such as identifier) and location information of the remote UE. In an embodiment, the remote UE may also report a measurement result thereof about the relay UE and the serving cell/neighbor cell to the eNB. Before sending the measurement report to the eNB, the remote UE may receive measurement reporting configuration information sent by the eNB, and report the measurement result to the eNB according to the measurement reporting configuration information when a measurement reporting condition is satisfied. In an embodiment, the remote UE may send a bearer switch request to the eNB, and request for converting into access via the eNB for transmitting communication data.

In step 408, if the eNB determines that the remote UE may switch a bearer to the eNB, i.e., the eNB is accessed to the network to perform communication data transmission, a bearer switch indicator is sent to the UE and used to indicate that the UE converts D2D relay node-based communication data transmission into eNB-based communication data transmission.

In step 408', the eNB may broadcast bearer switch judgment parameter information used for the remote UE to judge whether to execute bearer switch, i.e., conversion of relay UE-accessed communication data transmission into eNB-accessed communication data transmission. The bearer switch judgment parameter information includes one or combination of the following: an RRM measurement threshold value of UE for a serving cell and/or a neighbor cell; and a measurement threshold value for D2D communication between UE and a D2D relay node.

Note: the step may replace step 407 and step 408. That is, if the eNB broadcasts a switch judgment parameter, the UE does not need to report a UE-to-NW relay indicator to the eNB, the eNB does not need to execute bearer switch judgment and sends a bearer switch indicator to the UE, but the UE self-determines whether to transmit data through the eNB instead.

In step 409, if receiving the bearer switch indicator, the remote UE determines to transmit cellular communication data through the eNB.

In step 410, the remote UE initiates an Evolved Packet System (EPS) bearer setup process. Or, if the remote UE receives bearer switch judgment parameter information, the UE self-determines whether the eNB transmits cellular communication data according to a measurement result thereof about a serving cell and/or a neighbor cell and/or a D2D relay node. If the measurement result satisfies a predefined criterion, it is determined that the eNB transmits the cellular communication data, and the EPS bearer setup process is initiated.

In step 411, in an embodiment, the remote UE may send a relay connection release message to the relay UE so as to inform the relay UE; or, the relay UE may release a connection with the remote UE after an activation timer (started/restarted when receiving or sending D2D data to the remote UE) expires.

### Example 2:

The present embodiment describes a method flow of switching to a UE-to-NW relay of a relay UE for network access after an eNB-accessed UE moves out of a coverage range of an eNB. Fig. 8 is a flowchart of the method in the present example. As shown in Fig. 7, the method in the present embodiment includes the steps as follows.

In step 501, a UE is accessed to a network through an eNB and transmits data. In a process of moving the UE out of a coverage range of a cell, the UE may send a relay node access request indicator to the eNB, so as to request the eNB for converting into a communication manner of access through a D2D relay node. In an embodiment, the UE may also report an identifier of the D2D relay node already accessed by the UE or D2D relay node information (such as identification information) detected by the UE to the eNB.

In step 502, in an embodiment, the UE may report current location information thereof, or measurement results thereof about the accessed relay UE, a serving cell and a neighbor cell to the eNB.

In step 503, the eNB determines that it is necessary to switch the UE to a UE-to-NW relay of a relay UE for network access, and selects one relay UE for the UE. In an embodiment, the eNB may execute judgment according to the information reported by the UE and select the relay UE. As mentioned in step 501, the information reported by the UE may include one or combination of the following: a relay node access request indicator, an identifier of a D2D relay node already accessed by the UE or D2D relay node information (such as identification information) detected by the UE, current location information of the UE, or measurement results of the UE about the accessed relay UE, a serving cell and a neighbor cell.

In step 504, the eNB sends a relay access request message to the selected D2D relay node. The relay access request message may comprise: identification information of the remote UE, communication service QoS demand information of the remote UE, D2D security capability information, D2D security relevant parameter information, D2D communication group identification information of the remote UE, a D2D relay type (i.e., UE-to-NW relay) requested by the remote UE, priority information of the remote UE, priority information of a D2D communication group where the remote UE is located, priority information of a D2D communication service of the remote UE, and configuration information of D2D communication between the remote UE and the relay UE. Herein, the communication service QoS demand information of the remote UE may comprise information such as a QoS Class Identifier (QCI), an Allocation and Retention Priority (ARP), a Guaranteed Bit Rate (GBR), and a Maximum Bit Rate (MBR). Herein, the configuration information of the D2D communication between the remote UE and the relay UE may comprise D2D communication bearer configuration information, security relevant configuration information and the like. QoS is an abbreviation for quality of service.

In step 505, after receiving the relay access request message, the relay UE needs to execute admission control, and judges whether to allow the remote UE to be accessed to the network through a relay of the relay UE. The relay UE may determine whether to allow access for D2D UE1 according to an own relay capability, transmitting and receiving capabilities, the number of D2D UE already accessed, priority information, and communication service QoS demand information of D2D UE. If the relay UE allows access for the remote UE, a relay access response message is sent to the eNB. The relay access response message may comprise: identification information of the remote UE, and configuration information of D2D communication between the remote UE and the relay UE. Herein, the configuration information of the D2D communication between the remote UE and the relay UE may comprise D2D communication bearer configuration information, security relevant configuration information and the like. If the relay UE does not allow access for the remote UE, a refusal message is returned to the eNB, and the eNB may select other relay UE candidates for the remote UE.

In step 506, after receiving the relay access response message, the eNB sends access node switch information to the remote UE so as to command the remote UE to be accessed to the relay UE. The access node switch information may comprise: information of a D2D relay node to be accessed, D2D communication resource information available for D2D communication between the remote UE and the relay UE, D2D communication bearer configuration information of D2D communication between the remote UE and the relay UE, and a bearer switch indicator. Herein, the configuration information of the D2D communication between the remote UE and the relay UE may comprise D2D communication bearer configuration information, security relevant configuration information and the like. The bearer switch indicator is used to indicate whether the UE converts eNB-based communication data transmission into relay UE-based communication data transmission.

In step 507, if the remote UE confirms to be accessed to the network through the relay of the relay UE to perform cellular communication, a confirmation message is sent to the eNB.

In step 508, the remote UE may perform cellular communication through data forwarding of the relay UE.

Both the eNBs in Example 1 and Example 2 may be the foregoing first eNB, and the relay UE is the second D2D UE in the foregoing embodiments. The remote UE is the remote UE in the foregoing embodiments.

### Equipment Embodiment one:

As shown in Fig. 8, the present embodiment provides a communication node. The communication node is first D2D UE.

The first D2D UE includes:
a first receiving unit 310, configured to receive bearer control information sent by a first eNB; and
a switch unit 320, configured to switch to a second access node according to the bearer control information for transmitting communication data,
the first eNB is a first access node or the second access node, and
the second access node is the first eNB or a D2D relay node.

The first receiving unit in the present embodiment may include a receiving antenna and other structures, such as one or more receiving antennae located in the first D2D UE.

The structure of the switch unit 320 may be a processor or processing chip with an information forming function, such as a Application Processor (AP), a Central Processing Unit (CPU), a Micro Control Unit (MCU), a Digital Signal Processor (DSP), a Programmable Logic Controller (PLC) and other structures.

In a word, the communication node in the present embodiment is a D2D UE, capable of switching a bearer so as to ensure the continuity of communication transmission, and providing implementation hardware for the information processing method in Method Embodiment one.

The bearer control information includes a bearer switch indicator or bearer switch judgment parameter information.

The bearer switch indicator is used to instruct the first D2D UE to switch to the second access node for transmitting communication data; and the bearer switch judgment parameter information is used for the first D2D UE to determine whether the first D2D UE can switch to the second access node for transmitting communication data.

Herein, the bearer switch judgment parameter information includes at least one of an RRM measurement threshold value of a serving cell and a neighbor cell performed by the first D2D UE, and measurement threshold values of signals sent by a first relay node and a second relay node, and the second relay node is a relay node distant from the first relay node within a specified range; and the first relay node is a D2D relay node connected to the first D2D UE, and the second relay node is a D2D relay node not connected to the first D2D UE.

The communication node may further include:
a first measurement unit, configured to measure at least one of a serving cell, a neighbor cell, a first relay node connected to the first D2D UE, and a second relay node, so as to form a measurement result, and the second relay node is a relay node distant from the first relay node within a specified range; and
a determination unit, configured to compare the measurement result with the bearer switch judgment parameter information to determine whether the first D2D UE can switch to the second access node for transmitting communication data.

The structure of the first measurement unit may include a communication interface capable of receiving signals sent by a serving cell, a neighbor cell, a first relay node connected to the first D2D UE, and a second relay node, and demodulation equipment for demodulating the signals and determining the signal intensity. Thus, the measurement result can be simply and conveniently obtained.

The determination unit may be processors of various types.

The first D2D UE further includes:
a first sending unit, configured to send bearer switch judgment auxiliary information to the first eNB.

The first sending unit may include one or more sending antennae, capable of sending the bearer switch judgment auxiliary information.

The bearer switch judgment auxiliary information may include at least one of the following:
UE-to-NW relay indication information, a measurement report, and location information;
the UE-to-NW relay indication information is used to instruct the first D2D UE to perform a current data transmission through a UE-to-NW relay;
the measurement report comprises an RRM measurement result of a current serving cell and/or neighbor cell performed by the first D2D UE and/or a measurement result of the UE about a signal sent by a first access node; and
the location information includes current geographical location information of the first D2D UE.

The first receiving unit is further configured to receive, before the first D2D UE sends a measurement report to the first eNB, measurement reporting configuration information sent by the first eNB.

The first D2D UE may further include:
a second measurement unit, configured to perform measurement according to the measurement reporting configuration information, so as to form the measurement result.

The first sending unit is configured to send, when the measurement result satisfies a reporting condition, the measurement report to the first eNB.

The structure of the second measurement unit may be similar to the structure of the first measurement unit.

In addition, the bearer control information comprises a D2D relay node discovery trigger threshold value.

The D2D relay node discovery trigger threshold value is used to trigger the first D2D UE to start D2D relay node discovery, so as to search for a D2D relay node allowing access for the first D2D UE.

The D2D relay node discovery trigger threshold value comprises a first threshold value.

The first threshold value is used to trigger, when a measurement value of a cell to which the first D2D UE is accessed is smaller than the first threshold value, the first D2D UE to start D2D relay node discovery, so as to search for a D2D relay node allowing access for the first D2D UE.

The D2D relay node discovery trigger threshold value comprises a first threshold value and a second threshold value.

The first threshold value and the second threshold value are used to trigger, when a measurement value of a cell to which the first D2D UE is accessed is smaller than the first threshold value and a measurement value for a neighbor cell of the cell to which the first D2D UE is accessed is smaller than the second threshold value, the first D2D UE to start D2D relay node discovery, so as to search for a relay node allowing access for the first D2D UE.

Relevant description for various pieces of information in the present embodiment may refer to description corresponding to Method Embodiment one, and will not be repeated herein.

### Equipment Embodiment 4:

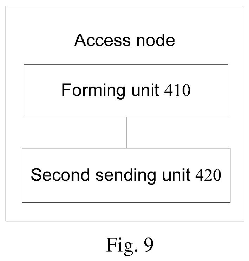

As shown in Fig. 9, the present embodiment provides a communication node. The communication node includes:
a forming unit 410, configured to form bearer control information; and
a second sending unit 420, configured to send the bearer control information to first D2D UE,
the bearer control information is used to switch the first D2D UE to a second access node for transmitting communication data.

Herein, the second access node is a first eNB or a D2D relay node; and the first eNB is a first access node or the second access node.

The first access node and the second access node are access nodes of different types.

The structure of the forming unit 410 in the present embodiment may be a processor or processing chip with an information forming function, such as an AP, a CPU, an MCU, a DSP, a PLC and other structures.

The second sending unit 420 may include one or more sending antennae.

The bearer control information includes a bearer switch indicator or bearer switch judgment parameter information.

The bearer switch indicator is used to instruct the first D2D UE to switch to the second access node for transmitting communication data.

The bearer switch judgment parameter information is used for the first D2D UE to determine whether the first D2D UE can switch to the second access node for transmitting communication data.

The bearer switch judgment parameter information includes at least one of an RRM measurement threshold value of a serving cell and a neighbor cell performed by the first D2D UE, and measurement threshold values of signals sent by a first relay node and a second relay node, and the second relay node is a relay node distant from the first relay node within a specified range; and the first relay node is a D2D relay node connected to the first D2D UE, and the second relay node is a D2D relay node not connected to the first D2D UE.

The communication node further includes:
a second receiving unit, configured to receive bearer switch judgment auxiliary information sent by the first D2D UE;
the forming unit 410 is configured to form the bearer control information according to the bearer switch judgment auxiliary information.

The second receiving unit may be a receiving antenna on the access node. In a word, the communication node in the present embodiment is a D2D UE, capable of switching a bearer so as to ensure the continuity of communication transmission, and providing implementation hardware for the information processing method in Method Embodiment two. Relevant description for various pieces of information in the present embodiment may refer to description corresponding to Method Embodiment one, and will not be repeated herein. Usually, the communication node in the present embodiment is an eNB.

The bearer switch judgment auxiliary information includes at least one of the following:
UE-to-NW relay indication information, a measurement report, and location information;
the UE-to-NW relay indication information is used to instruct the first D2D UE to perform a current data transmission through a UE-to-NW relay;
the measurement report comprises an RRM measurement result of a current serving cell and/or neighbor cell performed by the first D2D UE and/or a measurement result of the UE about a signal sent by a first access node; and
the location information includes current geographical location information of the first D2D UE.

The measurement report is reported when the measurement result satisfies the reporting condition.

In the communication node in the present embodiment, any two receiving units and/or sending units on the same communication node may correspond to communication interfaces with transceiver functions at the same time, such as a transceiver antenna.

In addition, the bearer control information comprises a D2D relay node discovery trigger threshold value.

The D2D relay node discovery trigger threshold value is used to trigger the first D2D UE to start D2D relay node discovery, so as to search for a D2D relay node allowing access for the first D2D UE.

The D2D relay node discovery trigger threshold value comprises a first threshold value.

The first threshold value is used to trigger, when a measurement value of a cell to which the first D2D UE is accessed is smaller than the first threshold value, the first D2D UE to start D2D relay node discovery, so as to search for a D2D relay node allowing access for the first D2D UE.

The D2D relay node discovery trigger threshold value comprises a first threshold value and a second threshold value.

The first threshold value and the second threshold value are used to trigger, when a measurement value of a cell to which the first D2D UE is accessed is smaller than the first threshold value and a measurement value for a neighbor cell of the cell to which the first D2D UE is accessed is smaller than the second threshold value, the first D2D UE to start D2D relay node discovery, so as to search for a relay node allowing access for the first D2D UE.

In some embodiments provided by the present invention, it should be understood that the disclosed equipment and method may be implemented in another manner. The equipment embodiment described above is only schematic. For example, division of the units is only logic function division, and other division manners may be adopted during practical implementation. For example, a plurality of units or components may be combined or integrated into another system, or some characteristics may be neglected or not executed. In addition, coupling or direct coupling or communication connection between each displayed or discussed component may be indirect coupling or communication connection, implemented through some interfaces, of the equipment or the units, and may be electrical and mechanical or adopt other forms.

The abovementioned units described as separate parts may or may not be physically separated, and parts displayed as units may or may not be physical units, and namely may be located in the same place, or may also be distributed to a plurality of network units. Part or all of the units may be selected to achieve the purpose of the solutions of the present embodiment according to a practical requirement.

In addition, each function unit in each embodiment of the present invention may be integrated into a processing unit, each unit may also exist independently, and two or more than two units may also be integrated into a unit. The abovementioned integrated unit may be implemented in a hardware form, and may also be implemented in form of hardware and software function unit.

A person of ordinary skill in the art should know that: all or part of the steps of the abovementioned method embodiment may be implemented by instructing related hardware (such as processor) through a program, the abovementioned program may be stored in a computer-readable storage medium, and the program is executed to execute the steps of the abovementioned method embodiment; and the abovementioned storage medium includes: various media capable of storing program codes such as mobile storage equipment, a Read-Only Memory (ROM), a Random Access Memory (RAM), a magnetic disk or an optical disk.

The above is only the implementation manner of the present invention and not intended to limit the scope of protection of the present invention, and any variations or replacements apparent to those skilled in the art within the technical scope disclosed by the present invention shall fall within the scope of protection of the present invention. Therefore, the scope of protection of the present invention shall be subject to the scope of protection of the claims.

### Industrial Applicability

According to the information processing method and the communication node in the embodiment of the present invention, when a node of a first D2D UE is switched or the first D2D UE is connected with a plurality of access nodes at the same time, demands for bearer switch exist with the movement of the first D2D UE. In the method of the present embodiment, bearer control information is sent through a first eNB, and bearer switch for the D2D UE can be achieved in time, so as to maintain the continuity of data transmission.

## Claims

1. A method for processing information, comprising:
receiving, by a first Device-to-Device, D2D, User Equipment, UE, bearer control information sent by a first base station (S310); and
the first D2D UE switching from a first access node to a second access node to transmit communication data according to the bearer control information(S320);
wherein the first access node is the first base station and the second access node is a D2D relay node, or
the first access node is a D2D relay node and the second access node is the first base station;
wherein the bearer control information comprises a bearer switch indicator or bearer switch judgment parameter information, wherein the bearer switch indicator being used to instruct the first D2D User Equipment, UE, to switch to the second access node for transmitting communication data, and the bearer switch judgment parameter information being used for the first D2D UE to determine whether the first D2D UE can switch to the second access node for transmitting communication data;
**characterized in that** the bearer control information comprises a D2D relay node discovery trigger threshold value, and the D2D relay node discovery trigger threshold value being used to trigger the first D2D UE to start D2D relay node discovery and search for a D2D relay node allowing access for the first D2D UE.

2. The method as claimed in claim 1, the bearer switch judgment parameter information comprises at least one of: a Radio Resource Management, RRM, measurement threshold value of a serving cell and/or a neighbor cell, and measurement threshold values for signals sent by a first relay node and a second relay node; wherein the second relay node is a relay node distant from the first relay node within a specified range, the first relay node is a D2D relay node connected to the first D2D UE, and the second relay node is a D2D relay node not connected to the first D2D UE.

3. The method as claimed in claim 1, further comprising:
measuring at least one of a serving cell, a neighbor cell, a first relay node and a second relay node, and obtaining a measurement result, wherein the second relay node is a relay node distant from the first relay node within a specified range, the first relay node is a D2D relay node connected to the first D2D UE, and the second relay node is a D2D relay node not connected to the first D2D UE; and
comparing the measurement result with the bearer switch judgment parameter information to determine whether the first D2D UE can switch to the second access node for transmitting communication data.

4. The method as claimed in claim 1, wherein the D2D relay node discovery trigger threshold value comprises a first threshold value, and the first threshold value being used to trigger, when a measurement value of a cell to which the first D2D UE is accessed is smaller than the first threshold value, the first D2D UE to start D2D relay node discovery and search for the D2D relay node allowing access for the first D2D UE.

5. The method as claimed in claim 1, wherein the D2D relay node discovery trigger threshold value comprises a first threshold value and a second threshold value, and when a measurement value of a cell to which the first D2D UE is accessed is smaller than the first threshold value and a measurement value for a neighbor cell of the cell to which the first D2D UE is accessed is smaller than the second threshold value, the first threshold value and the second threshold value being used to trigger the first D2D UE to start D2D relay node discovery and search for a relay node allowing access for the first D2D UE.

6. The method as claimed in claim 1, before switching to a second access node according to the bearer control information for transmitting communication data, the method further comprising:
sending bearer switch judgment auxiliary information to the first base station, wherein the first base station is the first access node or the second access node;
wherein the bearer switch judgment auxiliary information comprises at least one of the following: UE to Network, UE-to-NW, relay indication information, a measurement report, and location information;
the UE-to-NW relay indication information is used to instruct that the first D2D UE is performing a current data transmission through a UE-to-NW relay;
the measurement report comprises an RRM measurement result of a current serving cell and/or neighbor cell performed by the first D2D UE, and/or a measurement result of a first relay node and a second relay node performed by the first D2D UE; the second relay node is a relay node distant from the first relay node within a specified range; the first relay node is a D2D relay node connected to the first D2D UE, and the second relay node is a D2D relay node not connected to the first D2D UE; and
the location information comprises current geographical location information of the first D2D UE.

7. The method as claimed in claim 6, before the first D2D UE sends a measurement report to the first base station, further comprising:
receiving measurement reporting configuration information sent by the first base station;
performing measurement according to the measurement reporting configuration information, and obtaining a measurement result; and
sending the measurement report to the first base station when the measurement result satisfies a reporting condition.

8. A method for processing information, comprising:
Forming, by a first base station, bearer control information(S410); and
Sending, by the first base station, the bearer control information to a first Device-to-Device, D2D, User Equipment, UE, wherein the bearer control information is used to switch the first D2D UE from a first access node to a second access node for transmitting communication data(S420);
wherein the first access node is the first base station and the second access node is a D2D relay node, or
the first access node is a D2D relay node and the second access node is the first base station;
wherein the bearer control information comprises a bearer switch indicator or bearer switch judgment parameter information, wherein the bearer switch indicator being used to instruct a first D2D User Equipment, UE, to switch to the second access node for transmitting communication data, and the bearer switch judgment parameter information being used for the first D2D UE to determine whether the first D2D UE can switch to the second access node for transmitting communication data;
**characterized in that** the bearer control information comprises a D2D relay node discovery trigger threshold value, and the D2D relay node discovery trigger threshold value being used to trigger the first D2D UE to start D2D relay node discovery and search for a D2D relay node allowing access for the first D2D UE.

9. A communication node, the communication node being a first Device-to-Device, D2D, User Equipment, UE,
the first D2D UE comprising:
a first receiving unit(310), configured to receive bearer control information sent by a first base station; and
a switch unit(320), configured to switch, according to the bearer control information, the first D2D UE from a first access node to a second access node to transmit communication data,
wherein the first access node is the first base station and the second access node is a D2D relay node, or
the first access node is a D2D relay node and the second access node is the first base station;
wherein the bearer control information comprises a bearer switch indicator or bearer switch judgment parameter information,
the bearer switch indicator being used to instruct the first D2D UE to switch to the second access node for transmitting communication data, and
the bearer switch judgment parameter information being used for the first D2D UE to determine whether the first D2D UE can switch to the second access node for transmitting communication data;
**characterized in that** the bearer control information comprises a D2D relay node discovery trigger threshold value, and the D2D relay node discovery trigger threshold value being used to trigger the first D2D UE to start D2D relay node discovery and search for a D2D relay node allowing access for the first D2D UE.

10. The communication node as claimed in claim 9, further comprising:
a first measurement unit, configured to measure at least one of a serving cell, a neighbor cell, a first relay node connected to the first D2D UE, and a second relay node, obtaining a measurement result, wherein the second relay node is a relay node distant from the first relay node within a specified range; and
a determination unit, configured to compare the measurement result with the bearer switch judgment parameter information to determine whether the first D2D UE can switch to the second access node for transmitting communication data.

11. The communication node as claimed in claim 9, the first D2D UE further comprising:
a first sending unit, configured to send bearer switch judgment auxiliary information to the first base station;
wherein the bearer switch judgment auxiliary information comprises at least one of the following: UE to Network, UE-to-NW, relay indication information, a measurement report, and location information;
the UE-to-NW relay indication information is used to instruct that the first D2D UE is performing a current data transmission through a UE-to-NW relay;
the measurement report comprises an RRM measurement result of a current serving cell and/or neighbor cell performed by the first D2D UE, and/or a measurement result of a first relay node and a second relay node performed by the first D2D UE; the second relay node is a relay node distant from the first relay node within a specified range; the first relay node is a D2D relay node connected to the first D2D UE, and the second relay node is a D2D relay node not connected to the first D2D UE; and
the location information comprises current geographical location information of the first D2D UE.

12. A first base station, comprising:
a forming unit(410), configured to form bearer control information; and
a second sending unit(420), configured to send the bearer control information to a first Device-to-Device, D2D, User Equipment, UE,
wherein the bearer control information is used for switching the first D2D UE from a first access node to a second access node to transmit communication data;
the first access node is the first base station and the second access node is a D2D relay node; or
the first access node is a D2D relay node and the second access node is a first base station;
wherein the bearer control information comprises a bearer switch indicator or bearer switch judgment parameter information, wherein the bearer switch indicator being used to instruct a first D2D User Equipment, UE, to switch to the second access node for transmitting communication data, and the bearer switch judgment parameter information being used for the first D2D UE to determine whether the first D2D UE can switch to the second access node for transmitting communication data;
**characterized in that** the bearer control information comprises a D2D relay node discovery trigger threshold value, and the D2D relay node discovery trigger threshold value being used to trigger the first D2D UE to start D2D relay node discovery and search for a D2D relay node allowing access for the first D2D UE.

## Patentansprüche

1. Verfahren zum Verarbeiten von Informationen, umfassend:
durch ein erstes Vorrichtung-zu-Vorrichtung, D2D-Benutzergerät, UE, (S310) Empfangen von Trägersteuerinformationen, die durch eine erste Basisstation gesendet werden; und
durch das erste D2D-UE Umschalten von einem ersten Zugriffsknoten auf einen zweiten Zugriffsknoten, um Kommunikationsdaten gemäß den Trägersteuerinformationen zu übertragen (S320);
wobei der erste Zugriffsknoten die erste Basisstation und der zweite Zugriffsknoten ein D2D-Relaisknoten ist, oder
der erste Zugriffsknoten ein D2D-Relaisknoten und der zweite Zugriffsknoten die erste Basisstation ist;
wobei die Trägersteuerinformationen eine Trägerumschaltanzeige oder Trägerumschalt-Beurteilungsparameterinformationen umfassen, wobei die Trägerumschaltanzeige verwendet wird, um das erste D2D-Benutzergerät, UE, anzuweisen, zum Übertragen von Kommunikationsdaten auf den zweiten Zugriffsknoten umzuschalten, und die Trägerumschalt-Beurteilungsparameterinformationen für das erste D2D-UE verwendet werden, um zu ermitteln, ob das erste D2D-UE zum Übertragen von Kommunikationsdaten auf den zweiten Zugriffsknoten umschalten kann;
**dadurch gekennzeichnet, dass** die Trägersteuerinformationen einen D2D-Relaisknoten-Erkennungsauslöseschwellenwert umfassen und der D2D-Relaisknoten-Erkennungsauslöseschwellenwert verwendet wird, um auszulösen, dass das erste D2D-UE die D2D-Relaisknotenerkennung beginnt und einen D2D-Relaisknoten sucht, der den Zugriff auf das erste D2D-UE zulässt.

2. Verfahren nach Anspruch 1, wobei die Trägerumschalt-Beurteilungsparameterinformationen mindestens eines umfassen aus: einem RRM, Messschwellenwert für Radio-Resource-Management, einer bedienenden Zelle und/oder einer Nachbarzelle und Messschwellenwerten für Signale, die durch einen ersten Relaisknoten und einen zweiten Relaisknoten gesendet werden; wobei der zweite Relaisknoten ein Relaisknoten in einem Abstand vom ersten Relaisknoten innerhalb eines angegebenen Bereichs ist, der erste Relaisknoten ein D2D-Relaisknoten ist, der mit dem ersten D2D-UE verbunden ist, und der zweite Relaisknoten ein D2D-Relaisknoten ist, der nicht mit dem ersten D2D-UE verbunden ist.

3. Verfahren nach Anspruch 1, ferner umfassend:
Messen von mindestens einem aus einer bedienenden Zelle, einer Nachbarzelle, einem ersten Relaisknoten und/oder einem zweiten Relaisknoten und Erhalten eines Messergebnisses, wobei der zweite Relaisknoten ein Relaisknoten in einem Abstand vom ersten Relaisknoten innerhalb eines angegebenen Bereichs ist, der erste Relaisknoten ein D2D-Relaisknoten ist, der mit dem D2D-UE verbunden ist, und der zweite Relaisknoten ein D2D-Relaisknoten ist, der nicht mit dem ersten D2D-UE verbunden ist; und
Vergleichen des Messergebnisses mit den Trägerumschalt-Beurteilungsparameterinformationen, um zu ermitteln, ob das erste D2D-UE zum Übertragen von Kommunikationsdaten auf den zweiten Zugriffsknoten umschalten kann.

4. Verfahren nach Anspruch 1, wobei der D2D-Relaisknoten-Erkennungsauslöseschwellenwert einen ersten Schwellenwert umfasst und der erste Schwellenwert verwendet wird, um auszulösen, dass das erste D2D-UE die D2D-Relaisknotenerkennung beginnt und den D2D-Relaisknoten sucht, der den Zugriff auf das erste D2D-UE zulässt, wenn ein Messwert einer Zelle, auf die auf das erste D2D-UE zugreift, kleiner als der erste Schwellenwert ist.

5. Verfahren nach Anspruch 1, wobei der D2D-Relaisknoten-Erkennungsauslöseschwellenwert einen ersten Schwellenwert und einen zweiten Schwellenwert umfasst und der erste Schwellenwert und der zweite Schwellenwert verwendet werden, um auszulösen, dass das erste D2D-UE die D2D-Relaisknotenerkennung beginnt und einen Relaisknoten sucht, der den Zugriff auf das erste D2D-UE zulässt, wenn ein Messwert einer Zelle, auf die auf das erste D2D-UE zugreift, kleiner ist als der erste Schwellenwert und ein Messwert für eine Nachbarzelle der Zelle, auf die das erste D2D-UE zugreift, kleiner ist als der zweite Schwellenwert.

6. Verfahren nach Anspruch 1, wobei das Verfahren vor dem Umschalten auf einen zweiten Zugriffsknoten gemäß den Trägersteuerinformationen zum Übertragen von Kommunikationsdaten ferner umfasst:
Senden von Trägerumschalt-Beurteilungshilfsinformationen an die erste Basisstation, wobei die erste Basisstation der erste Zugriffsknoten oder der zweite Zugriffsknoten ist;
wobei die Trägerumschalt-Beurteilungshilfsinformationen mindestens eines aus Folgendem umfassen: UE-zu-Netzwerk, UE-zu-NW, -Relaisanzeigeinformationen, einem Messbericht und Standortinformationen;
wobei die UE-zu-NW-Relaisanzeigeinformationen verwendet werden, um anzuweisen, dass das erste D2D-UE eine aktuelle Datenübertragung über ein UE-zu-NW-Relais durchführt;
der Messbericht ein RRM-Messergebnis einer aktuellen bedienenden Zelle und/oder Nachbarzelle umfasst, das durch das D2D-UE durchgeführt wurde, und/oder ein Messergebnis eines ersten Relaisknotens und eines zweiten Relaisknotens, das durch das D2D-UE durchgeführt wurde; wobei der zweite Relaisknoten ein Relaisknoten in einem Abstand vom ersten Relaisknoten innerhalb eines angegebenen Bereichs ist, der erste Relaisknoten ein D2D-Relaisknoten ist, der mit dem D2D-UE verbunden ist, und der zweite Relaisknoten ein D2D-Relaisknoten ist, der nicht mit dem ersten D2D-UE verbunden ist; und
die Standortinformationen aktuelle geografische Standortinformationen des ersten D2D-UE umfassen.

7. Verfahren nach Anspruch 6, vor dem Senden eines Messberichts durch das erste D2D-UE an die erste Basisstation ferner umfassend:
Empfangen von durch die erste Basisstation gesendeten Messberichtskonfigurationsinformationen;
Durchführen einer Messung gemäß den Messberichtskonfigurationsinformationen und Erhalten eines Messergebnisses; und
Senden des Messberichts an die erste Basisstation, wenn das Messergebnis eine Berichtsbedingung erfüllt.

8. Verfahren zum Verarbeiten von Informationen, umfassend:
Bilden von Trägersteuerinformationen durch eine erste Basisstation (S410); und
Senden der Trägersteuerinformationen an ein erstes Vorrichtung-zu-Vorrichtung, D2D-Benutzergerät, UE, wobei die Trägersteuerinformationen verwendet werden, um das erste D2D-UE zum Übertragen von Kommunikationsdaten von einem ersten Zugriffsknoten auf einen zweiten Zugriffsknoten umzuschalten (S420);
wobei der erste Zugriffsknoten die erste Basisstation und der zweite Zugriffsknoten ein D2D-Relaisknoten ist oder
der erste Zugriffsknoten ein D2D-Relaisknoten und der zweite Zugriffsknoten die erste Basisstation ist;
wobei die Trägersteuerinformationen eine Trägerumschaltanzeige oder Trägerumschalt-Beurteilungsparameterinformationen umfassen, wobei die Trägerumschaltanzeige verwendet wird, um ein erstes D2D-Benutzergerät, UE, anzuweisen, zum Übertragen von Kommunikationsdaten auf den zweiten Zugriffsknoten umzuschalten, und die Trägerumschalt-Beurteilungsparameterinformationen für das erste D2D-UE verwendet werden, um zu ermitteln, ob das erste D2D-UE zum Übertragen von Kommunikationsdaten auf den zweiten Zugriffsknoten umschalten kann;
**dadurch gekennzeichnet, dass** die Trägersteuerinformationen einen D2D-Relaisknoten-Erkennungsauslöseschwellenwert umfassen und der D2D-Relaisknoten-Erkennungsauslöseschwellenwert verwendet wird, um auszulösen, dass das erste D2D-UE die D2D-Relaisknotenerkennung beginnt und einen D2D-Relaisknoten sucht, der den Zugriff auf das erste D2D-UE zulässt.

9. Kommunikationsknoten, wobei der Kommunikationsknoten ein erstes Vorrichtung-zu-Vorrichtung, D2D-Benutzergerät, UE, ist,
das erste D2D-UE umfasst:
eine erste Empfangseinheit (310), die konfiguriert ist, um durch eine erste Basisstation gesendete Trägersteuerinformationen zu empfangen; und
eine Umschalteinheit (320), die konfiguriert ist, um das erste D2D-UE gemäß den Trägersteuerinformationen von einem ersten Zugriffsknoten auf einen zweiten Zugriffsknoten umzuschalten, um Kommunikationsdaten zu übertragen,
wobei der erste Zugriffsknoten die erste Basisstation und der zweite Zugriffsknoten ein D2D-Relaisknoten ist oder
der erste Zugriffsknoten ein D2D-Relaisknoten und der zweite Zugriffsknoten die erste Basisstation ist;
wobei die Trägersteuerinformationen eine Trägerumschaltanzeige oder Trägerumschalt-Beurteilungsparameterinformationen umfassen,
die Trägerumschaltanzeige verwendet wird, um das erste D2D-UE anzuweisen, zum Übertragen von Kommunikationsdaten auf den zweiten Zugriffsknoten umzuschalten, und
die Trägerumschalt-Beurteilungsparameterinformationen für das erste D2D-UE verwendet werden, um zu ermitteln, ob das erste D2D-UE zum Übertragen von Kommunikationsdaten auf den zweiten Zugriffsknoten umschalten kann;
**dadurch gekennzeichnet, dass** die Trägersteuerinformationen einen D2D-Relaisknoten-Erkennungsauslöseschwellenwert umfassen und der D2D-Relaisknoten-Erkennungsauslöseschwellenwert verwendet wird, um auszulösen, dass das erste D2D-UE die D2D-Relaisknotenerkennung beginnt und einen D2D-Relaisknoten sucht, der den Zugriff auf das erste D2D-UE zulässt.

10. Kommunikationsknoten nach Anspruch 9, ferner umfassend:
eine erste Messeinheit, die konfiguriert ist, um mindestens eines aus einer bedienenden Zelle, einer Nachbarzelle, einem ersten Relaisknoten, der mit dem ersten D2D-UE verbunden ist, und einem zweiten Relaisknoten zu messen und ein Messergebnis zu erhalten, wobei der zweite Relaisknoten ein Relaisknoten im Abstand vom ersten Relaisknoten innerhalb eines angegebenen Bereichs ist; und
eine Ermittlungseinheit, die konfiguriert ist, um das Messergebnis mit den Trägerumschalt-Beurteilungsparameterinformationen zu vergleichen, um zu ermitteln, ob das erste D2D-UE zum Übertragen von Kommunikationsdaten auf den zweiten Zugriffsknoten umschalten kann.

11. Kommunikationsknoten nach Anspruch 9, wobei das erste D2D-UE ferner umfasst:
eine erste Sendeeinheit, die konfiguriert ist, um Trägerumschalt-Beurteilungshilfsinformationen an die erste Basisstation zu senden;
wobei die Trägerumschalt-Beurteilungshilfsinformationen mindestens eines aus Folgendem umfassen: UE-zu-Netzwerk, UE-zu-NW, -Relaisanzeigeinformationen, einem Messbericht und Standortinformationen;
wobei die UE-zu-NW-Relaisanzeigeinformationen verwendet werden, um anzuweisen, dass das erste D2D-UE eine aktuelle Datenübertragung über ein UE-zu-NW-Relais durchführt;
der Messbericht ein RRM-Messergebnis einer aktuellen bedienenden Zelle und/oder Nachbarzelle umfasst, das durch das D2D-UE durchgeführt wurde, und/oder ein Messergebnis eines ersten Relaisknotens und eines zweiten Relaisknotens, das durch das D2D-UE durchgeführt wurde; wobei der zweite Relaisknoten ein Relaisknoten in einem Abstand vom ersten Relaisknoten innerhalb eines angegebenen Bereichs ist, der erste Relaisknoten ein D2D-Relaisknoten ist, der mit dem D2D-UE verbunden ist, und der zweite Relaisknoten ein D2D-Relaisknoten ist, der nicht mit dem ersten D2D-UE verbunden ist; und
die Standortinformationen aktuelle geografische Standortinformationen des ersten D2D-UE umfassen.

12. Erste Basisstation, umfassend:
eine Bildungseinheit (410), die konfiguriert ist, um Trägersteuerinformationen zu bilden; und
eine zweite Sendeeinheit (420), die konfiguriert ist, um die Trägersteuerinformationen an ein erstes Vorrichtung-zu-Vorrichtung, D2D-Benutzergerät, UE, zu senden,
wobei die Trägersteuerinformationen zum Umschalten des ersten D2D-UE von einem ersten Zugriffsknoten auf einen zweiten Zugriffsknoten verwendet werden, um Kommunikationsdaten zu übertragen;
der erste Zugriffsknoten die erste Basisstation und der zweite Zugriffsknoten ein D2D-Relaisknoten ist; oder
der erste Zugriffsknoten ein D2D-Relaisknoten und der zweite Zugriffsknoten eine erste Basisstation ist;
wobei die Trägersteuerinformationen eine Trägerumschaltanzeige oder Trägerumschalt-Beurteilungsparameterinformationen umfassen, wobei die Trägerumschaltanzeige verwendet wird, um ein erstes D2D-Benutzergerät, UE, anzuweisen, zum Übertragen von Kommunikationsdaten auf den zweiten Zugriffsknoten umzuschalten, und die Trägerumschalt-Beurteilungsparameterinformationen für das erste D2D-UE verwendet werden, um zu ermitteln, ob das erste D2D-UE zum Übertragen von Kommunikationsdaten auf den zweiten Zugriffsknoten umschalten kann;
**dadurch gekennzeichnet, dass** die Trägersteuerinformationen einen D2D-Relaisknoten-Erkennungsauslöseschwellenwert umfassen und der D2D-Relaisknoten-Erkennungsauslöseschwellenwert verwendet wird, um auszulösen, dass das erste D2D-UE die D2D-Relaisknotenerkennung beginnt und einen D2D-Relaisknoten sucht, der den Zugriff auf das erste D2D-UE zulässt.

## Revendications

1. Procédé de traitement d'informations, comprenant :
la réception, par un premier équipement utilisateur, UE, de dispositif à dispositif, D2D, d'informations de commande de porteuse envoyées par une première station de base (S310) ; et
la commutation, par le premier UE D2D, d'un premier nœud d'accès à un second nœud d'accès pour transmettre des données de communication conformément aux informations de commande de porteuse (S320) ;
dans lequel le premier nœud d'accès est la première station de base et le second nœud d'accès est un nœud de relais D2D ou
le premier nœud d'accès est un nœud de relais D2D et le second nœud d'accès est la première station de base ;
dans lequel les information de commande de porteuse comprennent un indicateur de commutation de porteuse ou des informations de paramètre de jugement de commutation de porteuse, l'indicateur de commutation de porteuse étant utilisé pour ordonner au premier équipement utilisateur, UE D2D de commuter vers le second nœud d'accès pour transmettre des données de communication et les informations de paramètre de jugement de commutation de porteuse étant utilisées par le premier UE D2D pour déterminer si le premier UE D2D peut commuter vers le second nœud d'accès pour transmettre des données de communication ;
**caractérisé en ce que** les informations de commande de porteuse comprennent une valeur de seuil de déclenchement de découverte de nœud de relais D2D et la valeur de seuil de déclenchement de découverte de nœud de relais D2D étant utilisée pour déclencher le premier UE D2D afin de démarrer la découverte de nœud de relais D2D et de rechercher un nœud de relais D2D permettant l'accès pour le premier UE D2D.

2. Procédé selon la revendication 1, les informations de paramètre de jugement de commutation de porteuse comprennent au moins un des éléments suivants : une valeur de seuil de mesure de gestion de ressource radio, RRM d'une cellule de desserte et/ou d'une cellule voisine et des valeurs de seuil de mesure pour des signaux envoyés par un premier nœud de relais et un second nœud de relais ; dans lequel le second nœud de relais est un nœud de relais distant du premier nœud de relais dans une plage spécifiée, le premier nœud de relais est un nœud de relais D2D connecté au premier UE D2D et le second nœud de relais est un nœud de relais D2D non connecté au premier UE D2D.

3. Procédé selon la revendication 1, comprenant en outre :
la mesure d'au moins un élément parmi une cellule de service, une cellule voisine, un premier nœud de relais et un second nœud de relais et l'obtention d'un résultat de mesure, le second nœud de relais étant un nœud de relais distant du premier nœud de relais dans une plage spécifiée, le premier nœud de relais est un nœud de relais D2D connecté au premier UE D2D et le second nœud de relais est un nœud de relais D2D non connecté au premier UE D2D ; et
la comparaison du résultat de mesure avec les informations de paramètre de jugement de commutation de porteuse pour déterminer si le premier UE D2D peut commuter vers le second nœud d'accès pour transmettre des données de communication.

4. Procédé selon la revendication 1, dans lequel la valeur de seuil de déclenchement de découverte de nœud de relais D2D comprend une première valeur de seuil, et la première valeur de seuil étant utilisée pour déclencher, lorsqu'une valeur de mesure d'une cellule au niveau de laquelle le premier UE D2D est accédé est plus petite que la première valeur de seuil, le premier UE D2D pour commencer la découverte de nœud de relais D2D et rechercher le nœud de relais D2D permettant l'accès pour le premier UE D2D.

5. Procédé selon la revendication 1, dans lequel la valeur de seuil de déclenchement de découverte de nœud de relais D2D comprend une première valeur de seuil et une seconde valeur de seuil et lorsqu'une valeur de mesure d'une cellule au niveau de laquelle le premier UE D2D est accédé est inférieure à la première valeur de seuil et une valeur de mesure pour une cellule voisine de la cellule au niveau de laquelle le premier UE D2D est accédé est inférieure à la seconde valeur de seuil, la première valeur de seuil et la seconde valeur de seuil étant utilisées pour déclencher le premier UE D2D pour démarrer la découverte de nœud de relais D2D et rechercher un nœud de relais permettant l'accès pour le premier UE D2D.

6. Procédé selon la revendication 1, avant la commutation sur un second nœud d'accès en fonction des informations de commande de porteuse pour la transmission de données de communication, le procédé comprenant en outre :
l'envoi d'informations auxiliaires de jugement de commutation de porteuse à la première station de base, la première station de base étant le premier nœud d'accès ou le second nœud d'accès ;
dans lequel les informations auxiliaires de jugement de commutation de porteuse comprennent au moins un des éléments suivants : des informations d'indication de relais d'UE à réseau, UE-NW, un rapport de mesure et des informations de localisation ;
les informations d'indication de relais UE-NW sont utilisées pour indiquer que le premier UE D2D effectue une transmission de données actuelle via un relais UE-NW ;
le rapport de mesure comprend un résultat de mesure RRM d'une cellule de desserte actuelle et/ou d'une cellule voisine effectuée par le premier UE D2D et/ou un résultat de mesure d'un premier nœud de relais et d'un second nœud de relais effectuée par le premier UE D2D ; le second nœud de relais est un nœud de relais distant du premier nœud de relais dans une plage spécifiée ; le premier nœud de relais est un nœud de relais D2D connecté au premier UE D2D et le second nœud de relais est un nœud de relais D2D non connecté au premier UE D2D ; et
les informations de localisation comprennent des informations de localisation géographique actuelles du premier UE D2D.

7. Procédé selon la revendication 6, avant que le premier UE D2D envoie un rapport de mesure à la première station de base, comprenant en outre :
la réception d'informations de configuration de rapport de mesure envoyées par la première station de base ;
la réalisation d'une mesure en fonction des informations de configuration de rapport de mesure et l'obtention d'un résultat de mesure ; et
l'envoi du rapport de mesure à la première station de base lorsque le résultat de mesure satisfait une condition de rapport.

8. Procédé de traitement d'informations, comprenant :
la formation, par une première station de base, d'informations de commande de porteuse (S410) ; et
l'envoi, par la première station de base, des informations de commande de porteuse à un premier équipement utilisateur, UE, de dispositif à dispositif, D2D, les informations de commande de porteuse étant utilisées pour commuter le premier UE D2D d'un premier nœud d'accès à un second accès nœud pour transmettre des données de communication (S420) ;
dans lequel le premier nœud d'accès est la première station de base et le second nœud d'accès est un nœud de relais D2D ou
le premier nœud d'accès est un nœud de relais D2D et le second nœud d'accès est la première station de base ;
dans lequel les information de commande de porteuse comprennent un indicateur de commutation de porteuse ou des informations de paramètre de jugement de commutation de porteuse, l'indicateur de commutation de porteuse étant utilisé pour ordonner à un premier équipement utilisateur, UE D2D de commuter vers le second nœud d'accès pour transmettre des données de communication et les informations de paramètre de jugement de commutation de porteuse étant utilisées par le premier UE D2D pour déterminer si le premier UE D2D peut commuter vers le second nœud d'accès pour transmettre des données de communication ;
**caractérisé en ce que** les informations de commande de porteuse comprennent une valeur de seuil de déclenchement de découverte de nœud de relais D2D et la valeur de seuil de déclenchement de découverte de nœud de relais D2D étant utilisée pour déclencher le premier UE D2D afin de démarrer la découverte de nœud de relais D2D et de rechercher un nœud de relais D2D permettant l'accès pour le premier UE D2D.

9. Nœud de communication, le nœud de communication étant un premier équipement utilisateur, UE, de dispositif à dispositif, D2D,
le premier UE D2D comprenant :
une première unité de réception (310), configurée pour recevoir des informations de commande de porteuse envoyées par une première station de base ; et
une unité de commutation (320), configurée pour commuter, en fonction des informations de commande de porteuse, le premier UE D2D d'un premier nœud d'accès à un second nœud d'accès pour transmettre des données de communication,
dans lequel le premier nœud d'accès est la première station de base et le second nœud d'accès est un nœud de relais D2D ou
le premier nœud d'accès est un nœud de relais D2D et le second nœud d'accès est la première station de base ;
dans lequel les informations de commande de porteuse comprennent un indicateur de commutation de porteuse ou des informations de paramètre de jugement de commutation de porteuse,
l'indicateur de commutation de porteuse étant utilisé pour ordonner au premier UE D2D de commuter vers le second nœud d'accès pour transmettre des données de communication et
les informations de paramètre de jugement de commutation de porteuse étant utilisées par le premier UE D2D pour déterminer si le premier UE D2D peut commuter vers le second nœud d'accès pour transmettre des données de communication ;
**caractérisé en ce que** les informations de commande de porteuse comprennent une valeur de seuil de déclenchement de découverte de nœud de relais D2D et la valeur de seuil de déclenchement de découverte de nœud de relais D2D étant utilisée pour déclencher le premier UE D2D afin de démarrer la découverte de nœud de relais D2D et de rechercher un nœud de relais D2D permettant l'accès pour le premier UE D2D.

10. Nœud de communication selon la revendication 9, comprenant en outre :
une première unité de mesure, configurée pour mesurer au moins un élément parmi une cellule de service, une cellule voisine, un premier nœud de relais connecté au premier UE D2D et un second nœud de relais, obtenant un résultat de mesure, le second nœud de relais est un nœud de relais distant du premier nœud de relais dans une plage spécifiée ; et
une unité de détermination, configurée pour comparer le résultat de mesure avec les informations de paramètre de jugement de commutation de porteuse pour déterminer si le premier UE D2D peut commuter vers le second nœud d'accès pour transmettre des données de communication.

11. Nœud de communication selon la revendication 9, le premier UE D2D comprenant en outre :
une première unité d'envoi, configurée pour envoyer des informations auxiliaires de jugement de commutation de porteuse à la première station de base ;
dans lequel les informations auxiliaires de jugement de commutation de porteuse comprennent au moins un des éléments suivants : des informations d'indication de relais d'UE à réseau, UE-NW, un rapport de mesure et des informations de localisation ;
les informations d'indication de relais UE-NW sont utilisées pour indiquer que le premier UE D2D effectue une transmission de données actuelle via un relais UE-NW ;
le rapport de mesure comprend un résultat de mesure RRM d'une cellule de desserte actuelle et/ou d'une cellule voisine effectuée par le premier UE D2D et/ou un résultat de mesure d'un premier nœud de relais et d'un second nœud de relais effectuée par le premier UE D2D ; le second nœud de relais est un nœud de relais distant du premier nœud de relais dans une plage spécifiée ; le premier nœud de relais est un nœud de relais D2D connecté au premier UE D2D et le second nœud de relais est un nœud de relais D2D non connecté au premier UE D2D ; et
les informations de localisation comprennent des informations de localisation géographique actuelles du premier UE D2D.

12. Première station de base, comprenant :
une unité de formation (410) configurée pour former des informations de commande de porteuse ; et
une seconde unité d'envoi (420), configurée pour envoyer les informations de commande de porteuse à un premier équipement utilisateur, UE, de dispositif à dispositif, D2D,
dans laquelle les informations de commande de porteuse sont utilisées pour commuter le premier UE D2D d'un premier nœud d'accès vers un second nœud d'accès afin de transmettre des données de communication ;
le premier nœud d'accès est la première station de base et le second nœud d'accès est un nœud de relais D2D ; ou
le premier nœud d'accès est un nœud de relais D2D et le second nœud d'accès est une première station de base ;
dans laquelle les information de commande de porteuse comprennent un indicateur de commutation de porteuse ou des informations de paramètre de jugement de commutation de porteuse, l'indicateur de commutation de porteuse étant utilisé pour ordonner à un premier équipement utilisateur, UE D2D de commuter vers le second nœud d'accès pour transmettre des données de communication et les informations de paramètre de jugement de commutation de porteuse étant utilisées par le premier UE D2D pour déterminer si le premier UE D2D peut commuter vers le second nœud d'accès pour transmettre des données de communication ;
**caractérisée en ce que** les informations de commande de porteuse comprennent une valeur de seuil de déclenchement de découverte de nœud de relais D2D et la valeur de seuil de déclenchement de découverte de nœud de relais D2D étant utilisée pour déclencher le premier UE D2D afin de démarrer la découverte de nœud de relais D2D et de rechercher un nœud de relais D2D permettant l'accès pour le premier UE D2D.
